# EUROPEAN PATENT SPECIFICATION

(11) **EP 2 880 491 B1**
(45) Date of publication and mention of the grant of the patent: **13.03.2019**
(21) Application number: 13765432.3
(22) Date of filing: 24.06.2013
(51) Int. Cl.: G02C 13/00, B29D 12/02

(54) **METHOD FOR FINISHING A FRONT OF AN EYEGLASSES FRAME**
METHODE ZUR FERTIGSTELLUNG DES BRILLEN VORDERTEILES
MÉTHODE DE FINISSAGE DE LA FACE AVANT D'UNE MONTURE DE LUNETTES

(30) Priority: 30.07.2012 IT BO20120411
(43) Date of publication of application: 10.06.2015
(73) Proprietor: Luxottica S.r.l., 32021 Agordo (IT)
(72) Inventor: MASSENZ, Renato, I-32030 San Gregorio Nelle Alpi (Belluno) (IT)
(74) Representative: Modiano, Micaela Nadia
(86) International application number: PCT/IB2013/055175
(87) International publication number: WO 2014/020460

(56) References cited:
- FR-A1- 2 465 580
- US-A- 3 406 232
- US-A- 4 294 792

## Description

### Technical field

This invention relates to a method for finishing a front of an eyeglasses frame.

### Background art

The invention relates to the sector of eyeglasses and, more specifically, to processes for finishing eyeglasses frames, in the context of production of the eyeglasses frame itself.

In particular, the invention addresses acetate frames.

An eyeglasses frame comprises a front and two temples hinged to the front at zones of the front known as lugs.

Thus, the front comprises a hinge (or rather, a part of the hinge), and each of the temples also comprises a hinge (or rather, a part of the hinge).

The front and the temples are made by mechanical processes which result in rough edges and irregularities on their external surfaces.

Moreover, the hinges (or rather, the respective hinge parts) are coupled to the front and to the temples mechanically.

Subsequently, the front and the temples are subjected to a finishing process in order to remove the irregularities.

Finishing comprises a first treatment of the external surface using abrasive elements, rinsing and a subsequent second treatment of the external surface using further abrasive elements.

Some parts of the front and the temple surfaces are delicate and must be protected during these abrasive treatments.

For this purpose, protective caps are used, which are coupled to the delicate parts of the front and of the temples before starting the abrasive treatments.

Examples of this known technical solution are described in patent documents FR2465580A1, US4294792A, DE19955097A1, US3406232A and US4408843A.

More specifically, the delicate parts of the temples are the hinges. The delicate parts of the front, on the other hand, are the two hinges and the two lugs.

Typically, treatment with abrasive elements is performed in four steps, one after the other.

The first two steps involve tumbling, where powders (or grits) and oil are also used. Therefore, in these tumbling steps, the abrasive elements form a sticky paste.

Prior to the further steps, which polish and smooth the surfaces, this sticky paste must be removed.

This requires at least one rinsing step before the first two abrasive treatment steps and the second two.

In light of this, it should be noted that the hinge is a very delicate part both for the temples and for the front. It must therefore be protected at all times during treatment with abrasive materials.

As regards the front, it should be noted that the lugs, although delicate compared to the rest of the front, are less delicate than the hinges. The lugs must therefore be protected during the first two steps (that is, the steps which precede rinsing) but must not be protected during the last two steps, whose purpose is to also polish the lugs.

Thus, before all the steps, the hinge parts of the temples must be protected with caps, which are removed after all the abrasive treatment steps.

As regards the front, on the other hand, the procedure is as follows. Before the first two steps of the abrasive treatment, large capsules are applied to the front to cover both the hinges and the lugs.

After the first two abrasive treatment steps and before the second two, these capsules are removed manually by a person and substituted (again manually) for narrower caps which cover the hinges but not the lugs, which must remain uncovered during the last two steps of the abrasive treatment.

Substituting the capsules for the caps has numerous drawbacks, however: it is slow, expensive (because it necessitates manual work) and brings with it the risk of damaging the front, since the operation is carried out using pliers.

### Disclosure of the invention

This invention has for an aim to provide a method for finishing a front of an eyeglasses frame which overcomes the above mentioned disadvantages of the prior art.

More specifically, the invention has for an aim to provide a method which is particularly reliable, rapid and economical.

Another aim of the invention is to propose a protective cap to be applied to a front of an eyeglasses frame during a finishing process of the front itself and which allows finishing to be performed with a particularly reliable, rapid and economical method.

These aims are fully achieved by the method and protective cap according to the invention as characterized in the appended claims.

More specifically, the method according to the invention entails the use of at least one cap comprising a first protective member which is resistant to a rinsing liquid, in order to keep a first part of the zone covered even during the second treatment, and a second protective member which is soluble on contact with the rinsing liquid so as to leave uncovered a second part of the zone of the front during the second treatment.

Thus, in the method according to the invention, a part of the cap (the one applied to the lugs of the front) dissolves during rinsing.

This avoids the need to remove and substitute the caps between the initial and final steps of the abrasive treatment.

It should be noted that, more generally speaking, the invention also provides a method for treating at least one component of an eyeglasses frame, comprising at least one step of working the external surface of the component using abrasive elements and a preliminary step of coupling at least one protective element to at least one zone of the surface of that component, wherein the at least one protective element is soluble on contact with a rinsing liquid and wherein there is a step of rinsing the front after the step of working the external surface of the component using abrasive elements, so that the protective element dissolves during rinsing. Preferably, the protective element has a first portion (that is, a first protective member) which is resistant to the rinsing liquid and a second portion (that is, a second protective member) which dissolves on contact with the rinsing liquid.

Preferably, rinsing is carried out at least in water and the first protective member is resistant to water and the second protective member is hydrosoluble.

Preferably, the first protective member is releasably attached to the second protective member of the cap (during or before the step of applying the cap).

Thus, the invention also provides a protective cap designed to be applied to a front of an eyeglasses frame in order to protect a zone of the surface of the front during a finishing process of the front itself.

According to the invention, the cap comprises a first protective member which is resistant to a rinsing liquid, in order to keep a first part of the zone covered even after coming into contact with the rinsing liquid, and a second protective member which is soluble on contact with the rinsing liquid so as to leave uncovered a second part of the zone of the front after coming into contact with the rinsing liquid.

Further, it should be noted that the invention provides a use of a material which is soluble (preferably hydrosoluble) on contact with a rinsing liquid (preferably comprising water) to make (at least) one portion of a protective cap to be applied to a front of an eyeglasses frame in order to protect a surface zone of it during a process of finishing the front, wherein the process of finishing the front comprises the following steps: coupling the protective cap to that zone of the surface of the front; first treatment of the external surface of the front with abrasive elements; rinsing the front; second treatment of the surface of the front with abrasive elements.

Therefore, the invention offers at least the following advantages.

It avoids the need to make and store caps used to protect the hinges only. It speeds up the finishing process because there is no need for the step of manually removing the large caps to protect the lug and the hinge and the step of substituting them for small caps to protect the hinge only.

There are also considerable savings in costs and human resources. Further economic savings are obtained because there are half as many caps to be disposed of.

There is also a reduction in lead time, or flow time, indicating the time that passes between the arrival of the raw materials/components and the production of the finished product, thanks to the elimination of two steps in the process.

The invention thus overcomes the problem of speeding up the processes of finishing the eyeglasses frames (in particular the fronts, but also the temples and other parts of the frame. In effect, the use of a soluble material for making at least part of the protective cap saves having to perform a time-consuming and laborious step of manually removing the caps (or a part thereof) from the frame.

### Brief description of the drawings

This and other features of the invention will become more apparent from the following detailed description of a preferred, non-limiting example embodiment of it, with reference to the accompanying drawings, in which:

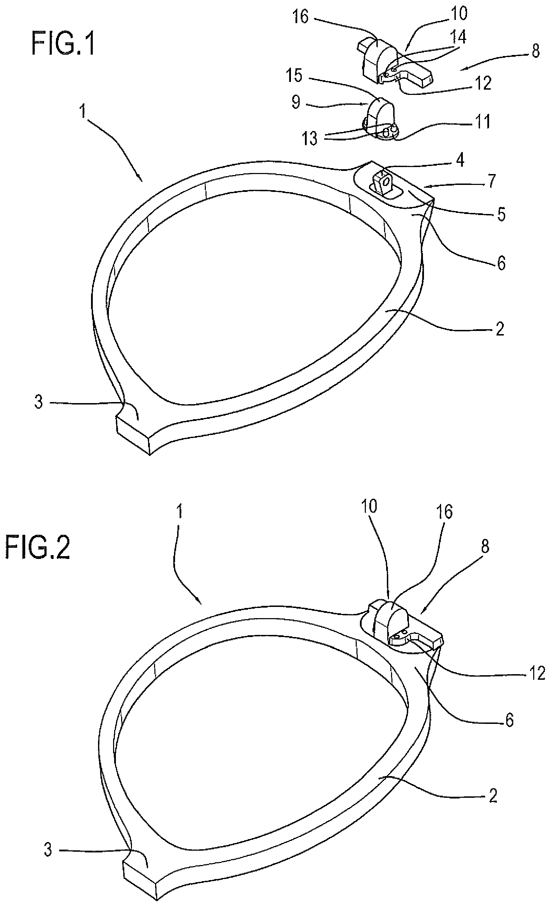

- Figure 1 is an exploded, perspective view illustrating a portion of a front of an eyeglasses frame with a protective cap;
- Figure 2 is a perspective view illustrating the portion of the front of Figure 1, with the protective cap coupled thereto.

### Detailed description of preferred embodiments of the invention

The numeral 1 in the drawings denotes a front of an eyeglasses frame. The frame also comprises two temples (not illustrated, of *per se* known type).

Substantially half the front 1 is shown in the drawings.

The front 1 comprises two rims 2 (only one of which is illustrated) designed to enclose and hold a lens of the eyeglasses.

The rims 2 are joined at a bridge 3.

The front 1 comprises two hinges 4 (or rather, hinge members), designed to connect the front 1 rotatably to the temples. It should be noted that only one of the two hinges 4 is illustrated in the drawings.

The front 1 also comprises two lugs 5 (only one of which is illustrated), located at opposite ends of the front 1 and to which the temple hinges are fixed.

The lugs 5 are surfaces which are machined (by removal of material) and which are formed on corresponding projections 6 defined by the rims 2 and protruding laterally from the selfsame rims 2.

The hinge 4 and the respective lug 5 define a delicate zone 7 of the surface of the front 1, where the hinge 4 constitutes a first part of the zone 7 and the lug 5 constitutes a second part of the zone 7.

Thus, the front 1 comprises two delicate zones 7.

Preferably, the hinge 4 is located inside the corresponding lug 5.

The numeral 8 denotes a protective cap.

According to the invention, the protective cap 8 comprises a first protective member 9 and a second protective member 10.

The first protective member 9 is made of a material which is resistant to a rinsing liquid (or fluid) and, preferably, is resistant to water (in the sense that it is not soluble in the rinsing liquid).

Preferably, the first protective member 9 is made of a water-resistant polymeric material. Preferably, the first protective member 9 is made of a polymeric material which is easy to mould and which has excellent mechanical strength properties, such as, for example, nylon or fibreglass-reinforced nylon.

The second protective member 10, on the other hand, is made of a material which is soluble in the rinsing liquid (or fluid) and which is, preferably, hydrosoluble, (in the sense that it is soluble in water). In other words, the second protective member 10 is made of a biodegradable material.

Preferably, the second protective member 10 is made of a hydrosoluble polymeric material. Preferably, the second protective member 10 is made of Hydrolene®.

It should be noted that the first and second protective members 9 and 10 are preferably different portions (that is, are made of different materials) of a one-piece cap 8 but they might also be independent pieces which can be (releasably) attached to each other.

The first protective member 9 covers the first part of the zone 7.

Thus, the first protective member 9 is designed to be coupled to the hinge 4.

Preferably, the first protective member 9 comprises a recess, that is, a hollow adapted to receive the hinge 4 (which protrudes from the front 1). Preferably, therefore, the first protective member 9 is shaped in such a way as to be fitted over the hinge 4 in order to cover it.

The second protective member 10 covers the second part of the zone 7. Thus, the second protective member 10 is designed to be coupled to the lug 5 (in contact with, or adherent to, the lug) in order to cover it. Preferably, the first and second protective members 9 and 10 are made by insert moulding so they are moulded in one piece.

Preferably, the first protective member 9 has a wall 11 (for attachment) facing in a direction opposite the opening of the recess (of the first protective member 9 itself). Thus, when the second protective member 10 is coupled (preferably by insert moulding) to the first protective member 9, the second protective member 10 abuts against the (attachment) wall 11. The first protective member 9 is preferably provided with attachment means on the (attachment) wall 11.

Preferably, the second protective member 10 has a portion 12 which is superposable over the (attachment) wall 11 of the first protective member 9 in order to interact with the attachment means.

Preferably, the attachment means comprise pins 13 which are insertable into slots 14 defined by the superposable portion 12 of the second protective member 10.

Preferably, the second protective member 10 is also superposable over a rounded top 15 of the first protective member 9 internally defining the recess. Preferably, therefore, the second protective member 10 in turn defines a hollow (formed in a box-shaped body 16 defined by the second protective member 10) which is larger than the hollow of the first protective member 9 (in effect, the hollow of the second protective member 10 constitutes a housing for the rounded top 15 of the first protective member 9).

Preferably, the second protective member 10 is insert-moulded over the first protective member 9 in order to cover it completely. In this case, the second protective member 10 at least partly abuts against the first protective member 9 (which constitutes an insert over which the second protective member 10 is injection moulded).

Thus, the protective cap 8 is designed to protect the delicate zone 7 of the front during a finishing process of the front 1.

The finishing process comprises the following steps, one after the other:
- coupling at least one protective cap 8 to at least one zone 7 of the surface of the front 1;
- first treatment of the external surface of the front 1 with abrasive elements;
- rinsing the front 1;
- second treatment of the external surface of the front 1 with (further) abrasive elements.

During the first treatment step, the delicate zone 7 is entirely covered (and hence protected) by the cap. More specifically, the first part of the zone 7 (the hinge 4) is covered by the first protective member 9 (placed in contact therewith) and the second part of the zone 7 (the lug 5) is covered by the second protective member 10 (placed in contact therewith).

During the rinsing step, the second protective member 10 dissolves, whilst the first protective member 9 remains in place to protect the first part of the zone 7 (the hinge 4).

During the second treatment step (with abrasives), the first part of the zone 7 (the hinge 4) remains covered (and hence protected) by the first protective member 9, whilst the second part of the zone 7 (the lug 5) is uncovered.

What has just been stated applies indistinctly to both of the delicate zones 7 of the front 1 which are coupled to a respective first and second protective cap 8.

It should be noted that, preferably, the first treatment step performed on the external surface of the front 1 comprises at least one tumbling step and the second treatment step performed on the external surface of the front 1 comprises at least one polishing step.

More in detail, in the preferred embodiment of it, the finishing process according to the invention occurs as follows.

First of all, the protective cap 8 (or rather, the protective caps 8) are applied to protect the lug 5 and the hinge 4 (or rather the lugs 5 and the hinges 4).

The first abrasive treatment step comprises at least a first and a second tumbling step.

The first tumbling step (also referred to as roughing), which removes the marks left on the surface of the front 1 by previous milling operations, is performed by placing the front 1 in a rotating barrel containing pieces of wood with rounded edges (for example, rhombic wooden blocks), pumice powder and oil. This step has a duration of approximately 18-20 hours.

In the second tumbling step (also referred to as smoothing), whose purpose is to give the roughed surface a finer finish, the front 1 is placed in a rotating barrel containing pieces of wood having more pointed shapes (cylindrical, cubic, other), able to act on the corners, and abrasive paste (oily). This step has a duration of approximately 18-20 hours.

The rinsing step comprises two or more washing cycles.

A first washing cycle is performed in baths (of water and detergent) with ultrasound and heating (to approximately 40°C). The purpose of this wash is to remove the aggregates of abrasive paste and oil, as well as the hydrosoluble part (that is, the second protective member 10) of the cap 8 which protected the lug 5 during previous tumbling.

A second wash is performed in water baths to rinse away the detergent. Rinsing is followed by a step of drying the fronts, where the fronts 1 are made to pass through air blowers.

Next comes the second abrasive treatment (that is, the second treatment with abrasive elements).

The second abrasive treatment, too, comprises at least two steps, as described below.

In a polishing step, the front 1 is placed in a rotating barrel containing only pieces of wood and abrasive paste (without oil). This step has a duration of approximately 18-20 hours.

In a subsequent buffing step, the front 1 is placed in a rotating barrel containing pieces of wood and polishing paste (without oil). This step has a duration of approximately 18-20 hours.

This is followed by a step of removing from the front 1 the first protective member 9 (or rather, the first protective members 9) which is (are) still in place and which protected the hinge 4 (or rather, the hinges 4) during the polishing and buffing steps.

It should be noted that the invention also provides a use of a material which is soluble in a liquid (or fluid) for rinsing a front 1 of an eyeglasses frame, to make at least one portion of the protective cap 8 to be applied to the front 1 to protect a delicate surface zone of it 7 during a process of finishing the selfsame front.

Preferably, the soluble material is a hydrosoluble material and, more preferably, a hydrosoluble, biodegradable polymeric material. Still more preferably, the material is Hydrolene®.

More specifically, the soluble material is used to make the second protective member 10 of the protective cap 8. Preferably, the protective cap 8 has the features described above.

The following paragraphs, listed in alphanumeric order for reference, are non-limiting example modes of describing this invention.
A. A method for finishing a front 1 of an eyeglasses frame, comprising the following steps:
   - coupling at least one protective cap 8 to at least one zone 7 of the surface of the front 1, the cap 8 being made in whole or in part of a material which is soluble on contact with a liquid used to rinse the front 1 of the eyeglasses frame;
   - treatment of the surface of the front 1 with abrasive elements;
   - rinsing the front 1 to dissolve and thereby remove the cap 8.

   A.1. The method of paragraph A, further comprising a second treatment of the surface of the front 1 with abrasive elements, wherein the at least one cap 8 comprises at least one first protective member 9 resistant to a rinsing liquid, in order to keep a first part of the zone 7 covered even during the second treatment, and at least one second protective member 10 which is soluble on contact with the rinsing liquid so as to leave uncovered a second part of the zone 7 of the front 1 during the second treatment.
   A.2. The method of paragraph A or of paragraph A.1, wherein rinsing is carried out at least in water and the soluble part of the cap 8 is hydrosoluble.
   A.3. The method of any of the paragraphs from A to A2, wherein the cap 8 is coupled to a hinge 4 of the front 1 and/or to the surface of a lug 5 of the front 1.
   A.4. The method of any of the paragraphs from A to A3, wherein the at least one soluble part of the cap 8 is made of a polymeric material.
B. A protective cap 8 configured to be applied to a front 1 of an eyeglasses frame in order to protect at least one zone 7 of the surface of the front 1 during a finishing process of the front 1 itself, and comprising at least one part which is soluble on contact with a liquid used to rinse the front 1 of the eyeglasses frame.
   B1. The cap 8 of paragraph B, comprising:
      - at least one first protective member 9 resistant to a rinsing liquid, in order to keep a first part of the zone 7 covered even after coming into contact with the rinsing liquid,
      - at least one second protective member 10 which is soluble on contact with the rinsing liquid so as to leave uncovered a second part of the zone 7 of the front 1 after coming into contact with the rinsing liquid.
   B2. The cap 8 of paragraph B or B1, wherein the at least one soluble part of the cap 8 is hydrosoluble.
   B3. The cap 8 of any of the paragraphs from B to B2 has a recess which is shaped in such a way as to receive a hinge 4 of the front 1 and/or has a flat wall which can be coupled to a lug 5 of the front 1 in such a way as to adhere thereto.
   B4. The cap 8 of any of the paragraphs from B to B2, wherein the at least one soluble part of the cap 8 is made of a polymeric material.
C. A use of a material which is soluble on contact with a liquid for rinsing a front 1 of an eyeglasses frame, to make at least one portion of a protective cap 8 to be applied to the front 1 in order to protect at least one surface zone of it 7 during a process of finishing the front 1 comprising the following steps:
   - coupling at least one protective cap 8 to the at least one zone 7 of the surface of the front 1;
   - first treatment of the surface of the front 1 with abrasive elements;
   - rinsing the front 1 so as to dissolve and thereby remove the cap 8.

   C1. The use of paragraph C, wherein the at least one cap 8 comprises at least one first protective member 9 resistant to the rinsing liquid and at least one second protective member 10 which is soluble on contact with the rinsing liquid so as to leave uncovered a second part of the zone 7 of the front 1 during the second treatment, and wherein the finishing method further comprises a second treatment of the surface of the front 1 using abrasive elements after dissolving the second member 10 of the cap 8 in order to remove it.
   C2. The use of paragraph C or C1, wherein the soluble material is hydrosoluble.
   C3. The use of any of the paragraphs from C to C2, wherein the soluble material is polymeric.

## Claims

1. A method for finishing a front (1) of an eyeglasses frame, comprising the following steps:
- coupling at least one protective cap (8) to at least one zone (7) of the surface of the front (1);
- first treatment of the surface of the front (1) with abrasive elements;
- rinsing the front (1);
- second treatment of the surface of the front (1) with abrasive elements,
**characterized in that** the at least one cap (8) comprises at least one first protective member (9) resistant to a rinsing liquid, in order to keep a first part of the zone (7) covered even during the second treatment, and at least one second protective member (10) which is soluble on contact with the rinsing liquid so as to leave uncovered a second part of the zone (7) of the front (1) during the second treatment.

2. The method according to claim 1, wherein rinsing is carried out at least in water and the first protective member (9) is resistant to water and the second protective member (10) is hydrosoluble.

3. The method according to claim 1 or 2, wherein the first part of the zone (7) of the front (1) is the surface of at least one hinge (4) of the front (1) and the second part of the zone (7) of the front (1) is the surface of at least one lug (5) of the front (1).

4. The method according to any of the preceding claims, wherein a first and a second cap (8) are coupled to a first and a second zone (7) of the front (1).

5. The method according to claim 4, wherein the caps (8) are coupled to the respective zones (7) in such a way that the first protective members (9) of the caps (8) cover the hinges (4) of the front (1) and the second protective members (10) of the coupled caps (8) cover the lugs (5) of the front (1).

6. The method according to any of the preceding claims, wherein the first treatment of the surface of the front (1) comprises at least one step of roughing by tumbling, and the second treatment of the surface of the front (1) comprises at least one step of polishing.

7. The method according to any of the preceding claims, comprising a step of preparing the cap (8) by insert moulding of the second protective member (10) over the first protective member (9).

8. The method according to claim 7, wherein the second protective member (10), when the cap (8) is coupled to the front (1), has a portion which is superposed over a corresponding portion of the first protective member (9).

9. The method according to any of the preceding claims, wherein the second protective member (10) is made of polymeric material.

10. A protective cap (8) designed to be applied to a front (1) of an eyeglasses frame in order to protect at least one zone (7) of the surface of the front (1) during a finishing process of the front (1) itself,
**characterized in that** it comprises:
- at least one first protective member (9) resistant to a rinsing liquid, in order to keep a first part of the zone (7) covered even after coming into contact with the rinsing liquid, and
- at least one second protective member (10) which is soluble on contact with the rinsing liquid so as to leave uncovered a second part of the zone (7) of the front (1) after coming into contact with the rinsing liquid.

11. The cap (8) according to claim 10, wherein the first protective member (9) is resistant to water and the second protective member (10) is hydrosoluble.

12. The protective cap (8) according to claim 10 or 11, wherein
- the first protective member (9) has a recess which is shaped in such a way as to receive a hinge (4) of the front (1);
- the second protective member (10) has a flat wall which can be coupled to a lug (5) of the front (1) in such a way as to adhere thereto.

13. The protective cap (8) according to any of the claims from 10 to 12, comprising a one-piece body, wherein the second protective member (10) is insert moulded over the first protective member (9).

14. The protective cap (8) according to claim 13, wherein
- the first protective member (9) has a recess and a wall (11) facing in a direction opposite the opening of the recess,
- the second protective member (10) has a portion (12) which is superposable over the wall (11) of the first protective member (9) for insert moulding over the latter.

15. The protective cap (8) according to any of the claims from 10 to 14, wherein the second protective member (10) is made of polymeric material.

16. A use of a material which is soluble on contact with a liquid for rinsing a front (1) of an eyeglasses frame, to make a portion of a protective cap (8) to be applied to the front (1) in order to protect at least one surface zone of it (7) during a process of finishing the front (1), the soluble material of the protective cap (8) being in combination with an unsoluble material, comprising the following steps:
- coupling at least one protective cap (8) to the at least one zone (7) of the surface of the front (1);
- first treatment of the surface of the front (1) with abrasive elements;
- rinsing the front (1), so that at least part of the protective cap is still protecting the front;
- second treatment of the surface of the front (1) with abrasive elements.

## Patentansprüche

1. Ein Verfahren zur Fertigstellung einer Vorderseite (1) eines Brillenrahmens, das folgende Schritte umfasst:
- Koppeln mindestens einer Schutzkappe (8) mit mindestens einem Bereich (7) der Oberfläche der Vorderseite (1),
- erste Behandlung der Oberfläche der Vorderseite (1) mit schleifenden Elementen;
- Spülen der Vorderseite (1);
- zweite Behandlung der Oberfläche der Vorderseite (1) mit schleifenden Elementen, **dadurch gekennzeichnet, dass** die mindestens eine Kappe (8) mindestens ein erstes Schutzglied (9) umfasst, das gegenüber einer Spülflüssigkeit resistent ist, um einen ersten Teil des Bereichs (7) selbst während der zweiten Behandlung bedeckt zu halten, und mindestens ein zweites Schutzglied (10), welches bei Kontakt mit der Spülflüssigkeit löslich ist, um einen zweiten Teil des Bereichs (7) der Vorderseite (1) während der zweiten Behandlung unbedeckt zu lassen.

2. Das Verfahren gemäß Anspruch 1, wobei das Spülen zumindest in Wasser durchgeführt wird und das erste Schutzglied (9) wasserresistent ist und das zweite Schutzglied (10) wasserlöslich ist.

3. Das Verfahren gemäß Anspruch 1 oder 2, wobei der erste Teil des Bereichs (7) der Vorderseite (1) die Oberfläche mindestens eines Scharniers (4) der Vorderseite (1) ist und der zweite Teil des Bereichs (7) der Vorderseite (1) die Oberfläche mindestens eines Vorsprungs (5) der Vorderseite (1) ist.

4. Das Verfahren gemäß einem beliebigen der obigen Ansprüche, worin eine erste und eine zweite Kappe (8) mit einem ersten und einem zweiten Bereich (7) der Vorderseite (1) gekoppelt sind.

5. Das Verfahren gemäß Anspruch 4, worin die Kappen (8) derart mit den jeweiligen Bereichen (7) gekoppelt sind, dass die ersten Schutzglieder (9) der Kappen (8) die Scharniere (4) der Vorderseite (1) bedecken und die zweiten Schutzglieder (10) der angeschlossenen Kappen (8) die Vorsprünge (5) der Vorderseite bedecken.

6. Das Verfahren gemäß einem beliebigen der obigen Ansprüche, worin die erste Behandlung der Oberfläche der Vorderseite (1) mindestens einen Schritt des Rauens durch Putzen umfasst und die zweite Behandlung der Oberfläche der Vorderseite (1) mindestens einen Schritt des Polierens umfasst.

7. Das Verfahren gemäß einem beliebigen der obigen Ansprüche, das einen Schritt des Bearbeitens der Kappe (8) durch Insert-Formen des zweiten Schutzglieds (10) über das erste Schutzglied (9) umfasst.

8. Das Verfahren gemäß Anspruch 7, worin das zweite Schutzglied (10), wenn die Kappe (8) mit der Vorderseite (1) verbunden ist, einen Abschnitt hat, der einen entsprechenden Abschnitt des ersten Schutzglieds (9) überlagert.

9. Das Verfahren gemäß einem beliebigen der obigen Ansprüche, worin das zweite Schutzglied (10) aus Polymermaterial besteht.

10. Eine Schutzkappe (8), konstruiert, um auf eine Vorderseite (1) eines Brillenrahmens aufgebracht zu werden, um mindestens einen Bereich (7) der Oberfläche der Vorderseite (1) während eines Prozesses der Fertigstellung der Vorderseite (1) selbst zu schützen,
**dadurch gekennzeichnet, dass** sie Folgendes umfasst:
- mindestens ein erstes Schutzglied (9), resistent gegenüber einer Spülflüssigkeit, um einen ersten Teil des Bereichs (7) selbst nach Kontakt mit der Spülflüssigkeit bedeckt zu halten, und
- mindestens ein zweites Schutzglied (10), das bei Kontakt mit der Spülflüssigkeit löslich ist, um einen zweiten Teil des Bereichs (7) der Vorderseite (1) nach Kontakt mit der Spülflüssigkeit unbedeckt zu lassen.

11. Die Kappe (8) gemäß Anspruch 10, wobei das erste Schutzglied (9) wasserresistent ist und das zweite Schutzglied (10) wasserlöslich ist.

12. Die Schutzkappe (8) gemäß Anspruch 10 oder 11, wobei
- das erste Schutzglied (9) eine Vertiefung hat, die geformt ist, um ein Scharnier (4) der Vorderseite (1) aufzunehmen;
- das zweite Schutzglied (10) eine flache Wand hat, die so mit einem Vorsprung (5) der Vorderseite (1) gekoppelt werden kann, dass sie daran haftet.

13. Die Schutzkappe (8) gemäß einem beliebigen der Ansprüche 10 bis 12, die einen einteiligen Körper umfasst, wobei das zweite Schutzglied (10) über das erste Schutzglied (9) Insert-geformt wird.

14. Die Schutzkappe (8) gemäß Anspruch 13, wobei
- das erste Schutzglied (9) eine Vertiefung und eine Wand (11) hat, die in eine Richtung gegenüber der Öffnung der Vertiefung weist,
- das zweite Schutzglied (10) einen Abschnitt (12) hat, der die Wand (11) des ersten Schutzglieds (9) zum Insert-Formen über Letzteres überlagern kann.

15. Die Schutzkappe (8) gemäß einem beliebigen der Ansprüche 10 bis 14, wobei das zweite Schutzglied (10) aus Polymermaterial besteht.

16. Eine Verwendung eines Materials, das bei Kontakt mit einer Flüssigkeit zum Spülen einer Vorderseite (1) eines Brillenrahmens löslich ist, um einen Abschnitt einer Schutzkappe (8) herzustellen, die auf die Vorderseite (1) aufzusetzen ist, um mindestens einen Oberflächenbereich (7) davon während eines Prozesses der Fertigstellung der Vorderseite (1) zu schützen, wobei das lösliche Material der Schutzkappe (8) in Kombination mit einem unlöslichen Material vorliegt; folgende Schritte umfassend:
- Koppeln mindestens einer Schutzkappe (8) mit dem mindestens einen Bereich (7) der Oberfläche der Vorderseite (1);
- erste Behandlung der Oberfläche der Vorderseite (1) mit schleifenden Elementen;
- Spülen der Vorderseite (1), so dass mindestens ein Teil der Schutzkappe die Vorderseite weiterhin schützt;
- zweite Behandlung der Oberfläche der Vorderseite (1) mit schleifenden Elementen.

## Revendications

1. Procédé de finition d'une face avant (1) d'une monture de lunettes, comportant les étapes suivantes :
- couplage d'au moins une coiffe de protection (8) à au moins une zone (7) de la surface de la face avant (1),
- premier traitement de la surface de la face avant (1) avec des éléments abrasifs,
- rinçage de la face avant (1),
- second traitement de la surface de la face avant (1) avec des éléments abrasifs,
**caractérisé en ce que** la au moins une coiffe (8) comporte au moins un premier élément de protection (9) résistant à un liquide de rinçage, afin de maintenir une première partie de la zone (7) couverte même pendant le second traitement, et au moins un second élément de protection (10) qui est soluble au contact du liquide de rinçage de manière à laisser une seconde partie de la zone (7) de la face avant (1) non couverte pendant le second traitement.

2. Procédé selon la revendication 1, dans lequel un rinçage est effectué au moins dans l'eau et le premier élément de protection (9) est résistant à l'eau et le second élément de protection (10) est hydrosoluble.

3. Procédé selon la revendication 1 ou 2, dans lequel la première partie de la zone (7) de la face avant (1) est la surface d'au moins une charnière (4) de la face avant (1) et la seconde partie de la zone (7) de la face avant (1) est la surface d'au moins une patte (5) de la face avant (1).

4. Procédé selon l'une quelconque des revendications précédentes, dans lequel une première et une seconde coiffe (8) sont couplées à une première et une seconde zone (7) de la face avant (1).

5. Procédé selon la revendication 4, dans lequel les coiffes (8) sont couplées aux zones (7) respectives de telle manière que les premiers éléments de protection (9) des coiffes (8) recouvrent les charnières (4) de la face avant (1) et les seconds éléments de protection (10) des coiffes (8) couplées recouvrent les pattes (5) de la face avant (1).

6. Procédé selon l'une quelconque des revendications précédentes, dans lequel le premier traitement de la surface de la face avant (1) comporte au moins une étape d'ébauche par polissage au tonneau, et le second traitement de la surface de la face avant (1) comporte au moins une étape de polissage.

7. Procédé selon l'une quelconque des revendications précédentes, comportant une étape de préparation de la coiffe (8) par moulage d'insert du second élément de protection (10) au-dessus du premier élément de protection (9).

8. Procédé selon la revendication 7, dans lequel le second élément de protection (10), lorsque la coiffe (8) est couplée à la face avant (1), a une portion qui est superposée sur une portion correspondante du premier élément de protection (9).

9. Procédé selon l'une quelconque des revendications précédentes, dans lequel le second élément de protection (10) est constitué d'une matière polymère.

10. Coiffe de protection (8) conçue pour être appliquée sur une face avant (1) d'une monture de lunettes afin de protéger au moins une zone (7) de la surface de la face avant (1) pendant un processus de finition de la face avant (1) elle-même,
**caractérisée en ce qu'**elle comporte :
- au moins un premier élément de protection (9) résistant à un liquide de rinçage, afin de maintenir une première partie de la zone (7) couverte même après l'entrée en contact avec le liquide de rinçage, et
- au moins un second élément de protection (10) qui est soluble au contact du liquide de rinçage de manière à laisser une seconde partie de la zone (7) de la face avant (1) non couverte après l'entrée en contact avec le liquide de rinçage.

11. Coiffe (8) selon la revendication 10, dans laquelle le premier élément de protection (9) est résistant à l'eau et le second élément de protection (10) est hydrosoluble.

12. Coiffe de protection (8) selon la revendication 10 ou 11, dans laquelle
- le premier élément de protection (9) a un évidement qui est formé de telle manière à recevoir une charnière (4) de la face avant (1),
- le second élément de protection (10) a une paroi plate qui peut être couplée à une patte (5) de la face avant (1) de telle manière à adhérer à celle-ci.

13. Coiffe de protection (8) selon l'une quelconque des revendications 10 à 12, comportant un corps monobloc, dans laquelle le second élément de protection (10) est moulé par insertion au-dessus du premier élément de protection (9).

14. Coiffe de protection (8) selon la revendication 13, dans laquelle
- le premier élément de protection (9) a un évidement et une paroi (11) dirigée dans une direction opposée à l'ouverture de l'évidement,
- le second élément de protection (10) a une portion (12) qui peut être superposée sur la paroi (11) du premier élément de protection (9) pour un moulage par insertion au-dessus de ce dernier.

15. Coiffe de protection (8) selon l'une quelconque des revendications 10 à 14, dans laquelle le second élément de protection (10) est constitué d'une matière polymère.

16. Utilisation d'un matériau qui est soluble au contact d'un liquide pour rincer une face avant (1) d'une monture de lunettes, pour fabriquer une portion d'une coiffe de protection (8) devant être appliquée sur la face avant (1) afin de protéger au moins une zone de sa surface (7) pendant un processus de finition de la face avant (1), le matériau soluble de la coiffe de protection (8) étant combiné avec un matériau insoluble, comportant les étapes suivantes :
- couplage d'au moins une coiffe de protection (8) à au moins une zone (7) de la surface de la face avant (1),
- premier traitement de la surface de la face avant (1) avec des éléments abrasifs,
- rinçage de la face avant (1), de sorte qu'au moins une partie de la coiffe de protection protège encore la face avant,
- second traitement de la surface de la face avant (1) avec des éléments abrasifs.
